# EUROPÄISCHE PATENTSCHRIFT

(11) **EP 0 802 077 B1**
(45) Veröffentlichungstag und Bekanntmachung des Hinweises auf die Patenterteilung: **03.05.2000**
(21) Anmeldenummer: 97106022.3
(22) Anmeldetag: 11.04.1997
(51) Int. Cl.: B60J 7/02

(54) **Gleitvorrichtung für ein Schiebedach**
Guiding device for sliding roof
Dispositif de guidage pour toit coulissant

(30) Priorität: 15.04.1996 JP 9268696
(43) Veröffentlichungstag der Anmeldung: 22.10.1997
(73) Patentinhaber: WEBASTO KAROSSERIESYSTEME GmbH, D-82131 Stockdorf (DE)
(72) Erfinder: Matsumura, Mitsuyoshi, Daikyo-Webasto Co., Ltd., Higashi-Hiroshima-shi, Hiroshima (JP)
(74) Vertreter: Wiese, Gerhard

(56) Entgegenhaltungen:
- DE-A- 2 234 852
- DE-A- 3 813 049
- US-A- 3 671 997

## Beschreibung

Die vorliegende Erfindung betrifft eine Gleitvorrichtung für ein Schiebedach gemäß dem Oberbegriff des Patentanspruchs 1.

Aus der DE 34 25 273 A1 ist eine Gleitvorrichtung für ein Schiebedach bekannt, bei der sich die Gleitschuhe mit elastisch federnden Elementen sowohl zur Außenseite der Führungsnut als auch zur Ober- und Unterseite hin abstützen. Durch die relativ kleinen Auflageflächen zwischen den Wandungen der Führungsnut und den federnden Elementen kann ein derartiger Gleitschuh zum Kippen neigen.

Es ist Aufgabe der vorliegenden Erfindung, eine Gleitvorrichtung zu schaffen, bei der eine sichere, spielfreie Anlage der Führungsflächen am Gleitelement und der dazu korrespondierenden Führungsnut gewährleistet ist.

Diese Aufgabe wird mit den in Patentanspruch 1 angegebenen Mitteln gelöst. Vorteilhafte Ausgestaltung der Erfindung sind den Unteransprüchen zu entnehmen.

Dadurch, daß zumindestens eine der oberen und unteren Führungsflächen der Führungsnut bzw. des Gleitelementes eine sich in Richtung der Tiefe der Führungsnut verengende konische Gestalt aufweist und das Gleitelement mittels eines Federteils federnd nach außen gedrückt wird, erfolgt eine flächige, spielfreie Anlage der Führungsflächen aneinander. Vorzugsweise sind die Gleitelemente an Haltern des Deckels mittels einer Rasteinrichtung befestigt, die eine Relativbewegung beider Teile quer zur Führungsschiene erlaubt und gleichzeitig ein vollständiges Entfernen des Gleitschuhs vom Halter verhindert.

Vorzugsweise weist der Deckel zur rechten und zur linken Seite jeweils zwei von den Haltern zur rechten und linken Seite weisende Vorsprünge auf, an denen jeweils ein Gleitelement 6 gelagert ist. Die Gleitelemente 6 stützen sich in einander gegenüberliegenden Führungsnuten 7 der Führungsschienen 5 ab.

Das Federteil wird in einer bevorzugten Ausführungsform von einer elastischen Zunge gebildet, die sich vom Gleitelement 6 ausgehend auf den Halter 8 hin erstreckt und das Gleitelement 6 federnd vom Halter 8 wegdrückt.

Gemäß einer alternativen Ausführungsform wird das Federteil von einer zwischen dem Gleitelement und dem Halter angeordneten Blattfeder gebildet.

Nachfolgend ist ein Ausführungsbeispiel der Erfindung anhand der Zeichnung beschrieben.
Es zeigt:
- Fig. 1: einen Querschnitt durch eine Gleitvorrichtung in einer ersten Ausführungsform,
- Fig. 2: eine perspektivische Ansicht der Gleitvorrichtung gemäß Fig. 1,
- Fig. 3: eine Draufsicht auf die Gleitvorrichtung gemäß Fig. 2,
- Fig. 4: eine Draufsicht auf eine zweite Ausführungsform,
- Fig. 5: einen Querschnitt durch die dritte Ausführungsform,
- Fig. 6: eine Explosionsdarstellung der dritten Ausführungsform,
- Fig. 7: einen Querschnitt durch eine vierte Ausführungsform,
- Fig. 8: eine Draufsicht auf die vierte Ausführungsform,
- Fig. 9: eine Seitenansicht der Mechanik eines Schiebehebedaches, bei dem die Erfindung anwendbar ist und
- Fig. 10: eine Draufsicht auf die Mechanik des Schiebehebedach gemäß Fig. 8.

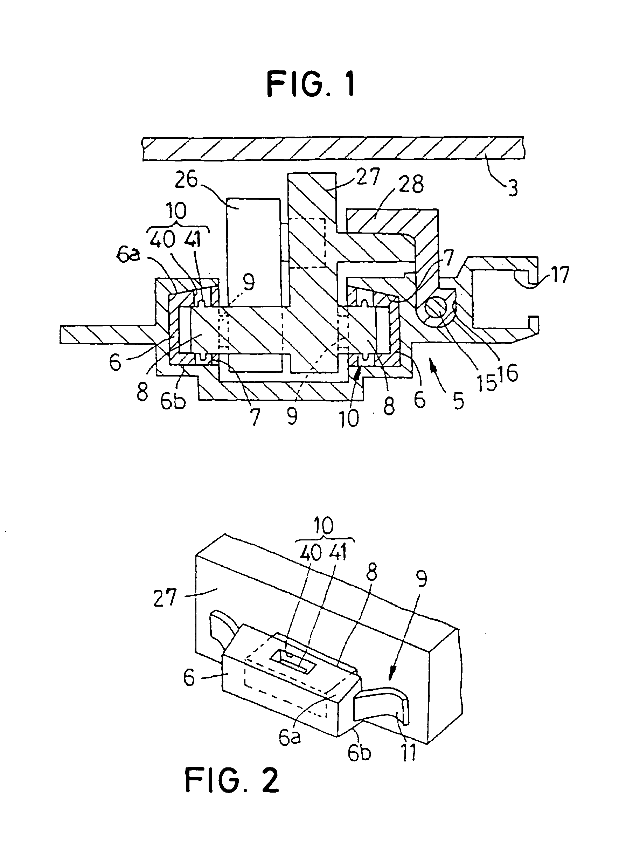

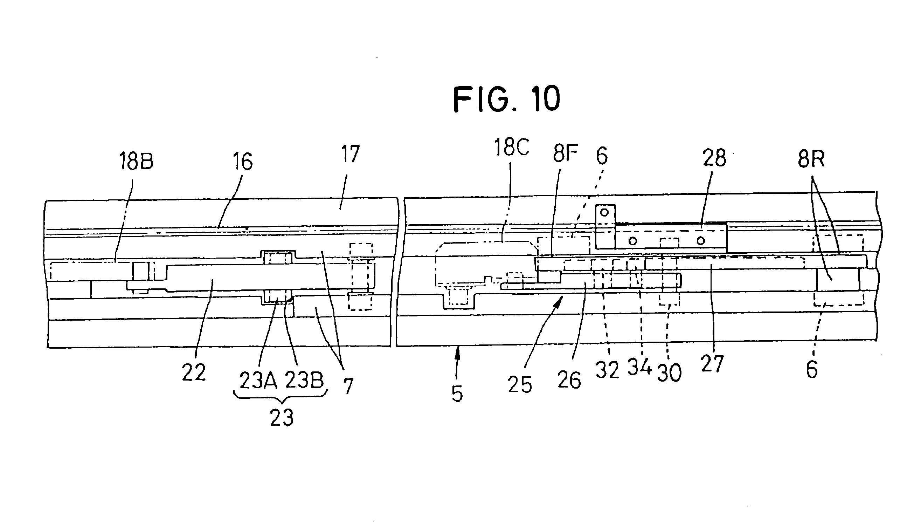

In den Figuren 1, 9 und 10 bezeichnet die Bezugszahl 1 ein Schiebedach, welches auf dem Fahrzeugdach 2 eines Fahrzeuges montiert ist, so daß eine im Fahrzeugdach 2 vorgesehene Dachöffnung 4 mittels eines Deckels 3 wahlweise durch Ausstellen oder Verschieben des Deckels freigelegt oder verschlossen werden kann. Zu beiden Seiten der Dachöffnung 4 erstrecken sich in Längsrichtung Führungsschienen 5, welche an einem Rahmen des Schiebedachs 1 und somit am festen Fahrzeugdach 2 befestigt sind. Die Führungsschienen 5 weisen jeweils ein Paar gegenüberliegende Führungsnuten 7 zur Abstützung und Führung des Deckels 3, eine Kabelführung 16 zur Führung eines Antriebskabels 15 und eine Himmelführung 17 auf, mittels der ein verschiebbarer Himmel geführt wird.

Der Deckel 3 ist aus Glas, einem Kunststoffmaterial oder Metall hergestellt und mit einer umlaufenden Dichtung versehen. An der rechten und der linken Seite des Deckels 3 sind an der Unterseite eine vordere Deckelabstützung 18A, eine mittlere Deckelabstützung 18B und eine hintere Deckelabstützung 18C entweder direkt oder mittels eine Klammer angeordnet.

Die vordere Deckelabstützung 18A weist eine vordere Lagerung 19 auf, die als Drehachse während der Schwenkbewegung des Deckels 3 beim Ausstellen oder Absenken wirkt. Die vordere Lagerung 19 weist auf gegenüberliegenden Seiten Gleitelemente auf, die in die einander gegenüberliegenden Führungsnuten 7 der Führungsschienen 5 eingreifen. Die vordere Lagerung 19 wird nach vorne durch einen Anschlag 20 an der Führungsschiene 5 begrenzt.

Die mittlere Deckelabstützung 18B unterstützt schwenkbar das vordere Ende eines Lagesicherungselements 22, dessen hinteres Ende gleitend in den Führungsnuten 7 der Führungsschiene 5 gelagert ist. Eine Sicherungseinrichtung 23 zur Begrenzung der Bewegung des Lagesicherungselements 22 ist zwischen der Führungsschiene 5 und dem Lagesicherungselement 22 ausgebildet.

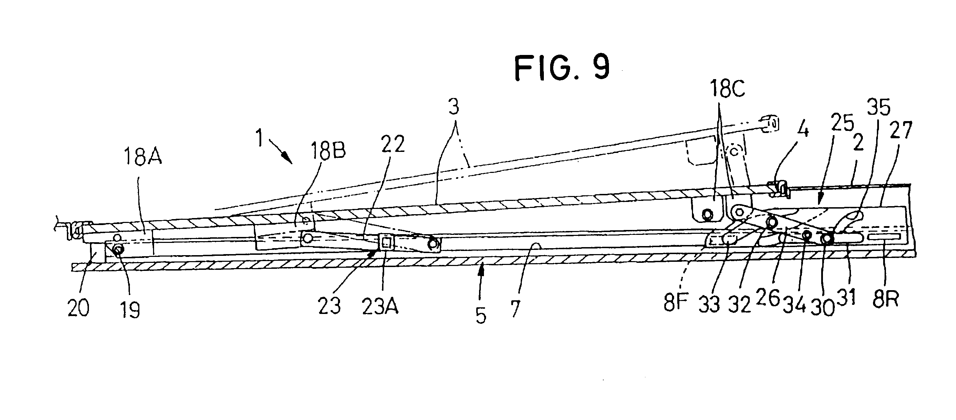

Hierzu weist das Lagesicherungselement 22 etwa in seiner Mitte vorspringende Rastelemente 23A auf, die mit einer Aussparung 23B an der Führungsschiene 5 zusammenwirken. Während der Schließposition des Deckels 3, welche in Fig. 9 in durchgezogenen Linien dargestellt ist, sowie in seiner nach oben ausgestellten Position steht das Rastelement 23A mit der Aussparung 23B im Eingriff, so daß dabei eine Verschiebung des Deckels 3 in Vorwärts- oder Rückwärtsrichtung sowie Rüttelbewegungen des Deckels 3 verhindert werden.

Zwischen der hinteren Deckelabstützung 18C und den Führungsschienen 5 ist ein Ausstellmechanismus 25 angeordnet, der einen Ausstellhebel 26 umfaßt, der über eine Stiftverbindung an seinem vorderen oberen Ende an der hinteren Deckelabstützung 18C angelenkt ist. Der Ausstellmechanismus 25 weist ferner eine verschiebbare Kulisse 27 auf, mittels der der Ausstellhebel 26 zu einer Schwenkbewegung in vertikaler Richtung veranlassbar ist.

Die Kulisse 27 weist in ihrem vorderen Bereich einen Halter 8F und in ihrem hinteren Bereich einen Halter 8R auf, welche zu beiden Seiten nach rechts und links in Querrichtung der Führungsschienen 5 Vorsprünge aufweisen. Die Halter 8F und 8R stehen mit passenden Gleitelementen 6 im Eingriff, welche ihrerseits in Längsrichtung verschiebbar, in den rechten und linken Führungsnuten 7 der Führungsschienen 5 gelagert sind.

An den Kulissen 27 ist jeweils zu einer Seite ein Verbindungsstück 28 befestigt, welches mit den in den Kabelführungen 16 verschiebbar geführten Antriebskabeln 15 fest verbunden ist. Durch eine Zug- oder Druckbewegung der Antriebskabel 15, welche entweder manuell oder mittels eines elektrischen Antriebs (nicht gezeigt) erfolgen kann, ist die Kulisse 27 in Längsrichtung der Führungsschiene 5 verschiebbar.

Die Kulisse 27 weist eine gerade verlaufende Nut 31 auf, in der ein hinterer Stift 30 des Ausstellhebels 26 geführt ist. Die Kulisse 27 weist weiterhin eine erste Anhebenut 33 auf, welche zur Führung eines vorderen Stiftes 32 des Ausstellhebels 26 dient. Schließlich weist die Kulisse 27 noch eine zweite Anhebenut 35 auf, in der ein mittlerer Stift 34 des Ausstellhebels 26 geführt ist. Durch Verschiebung der Kulisse 27 nach vorne wird der Deckel 3 aus seiner abgesenkten Position durch die Wirkung der ersten Anhebenut 33 in die Schließposition angehoben. Beim weiteren Anheben des Deckels 3 aus der Schließposition in seine Ausstellposition kommt die zweite Anhebenut 35 zur Wirkung.

Bei einer Verschiebung der Kulisse 27 nach hinten aus der Position, in der der Deckel 3 ausgestellt ist, nimmt der Deckel unter Durchlaufen der Schließposition eine nach unten abgesenkte Position ein und bei einer weiteren Rückwärtsbewegung der Kulisse 27 wird der Deckel in seine vollständig geöffnete Position unterhalb des festen Fahrzeugdachs 2 verschoben, wobei die abgesenkte Position beibehalten wird.

In einer ersten Ausführungsform gemäß den Figuren 1 - 3 sind die Gleitelemente 6 kastenförmig aus einem Kunststoff geformt und erstrecken sich über die von den Haltern 8 an der Kulisse 27 nach rechts und links erstreckenden Vorsprünge, wobei eine Relativbewegung in Querrichtung der Führungsschienen 5 möglich ist.

An jedem Gleitelement 6 ist wenigstens an der oberen oder unteren Fläche 6a oder 6b eine Öffnung 40 vorgesehen, in welche hinein sich jeweils ein Vorsprung 41 erstreckt, der in vertikaler Richtung von den Haltern 8 vorspringt. Die Öffnungen 40 und die Vorsprünge 41 bilden zusammen ein Rastelement 10, welches eine begrenzte Bewegung des Gleitelements 6 bezüglich des Halters 8 in Querrichtung der Führungsschienen 5 ermöglicht, jedoch ein vollständiges Entfernen der Gleitelemente 6 von den Haltern 8 verhindert. Die Vorsprünge 41 werden in die Öffnungen 40 unter Ausnutzung der elastischen Deformierung der Gleitelemente 6 eingebracht.

Die obere Gleitfläche 6a des Gleitelements 6 weist eine gleichmäßig in Richtung der Tiefe der zugehörigen Führungsnut 7 geneigte Oberfläche auf, so daß sich die Oberfläche in Richtung auf die Tiefe der Führungsnut 7 immer stärker deren horizontaler Mittellinie annähert. Die obere Gleitfläche der Führungsnut 7 wird ebenfalls in Richtung auf die Tiefe der Nut 7 abfallend ausgebildet, so daß sie zur oberen Gleitfläche 6a des Gleitelements 6 korrespondiert und beide Gleitflächen in einem flächigen Kontakt zueinander stehen.

In jeder Führungsschiene 5 ist der Teil, in dem die Führungsnut ausgebildet ist, im Querschnitt wie ein auf der Seite liegendes U ausgebildet, wobei nur die Oberseite der oberen Wand der Führungsschiene 5, die in gleitendem Kontakt mit der oberen Gleitfläche 6a steht, geneigt ist. Es kann jedoch auch die gesamte obere Wand der Führungsschiene 5 geneigt sein, so daß sie eine gleichmäßige Wandstärke aufweist.

Der kastenartige Teil der Gleitelemente 6 weist integral damit ausgebildete vordere und hintere Zungen 11 auf, die in der Draufsicht bogenförmig ausgebildet sind und sich elastisch an die Seitenfläche der Kulisse 27 anlegen, so daß sie den kastenförmigen Teil der Gleitelemente 6 in Richtung der Tiefe der Führungsnut 7 nach außen drücken.

Dadurch befinden sich die obere und die untere Führungsfläche 6a und 6b in flächigem Kontakt mit der oberen und unteren Führungsfläche der entsprechenden Führungsnut 7 in jeder der Führungsschienen 5. Durch die von den Zungen 11 gebildeten Federteile 9 werden Toleranzabweichungen in der vertikalen Höhe und der Tiefe der Führungsnuten 7 vollständig ausgeglichen. Dadurch, daß auch die obere und untere Führungsfläche der Führungsschiene 5 und der Gleitelemente 6 durch den elastischen Druck in federnder Anlage gehalten werden kann der Deckel 3 mit einer hohen Präzision sowohl in vertikaler als auch in transversaler Richtung positioniert werden.

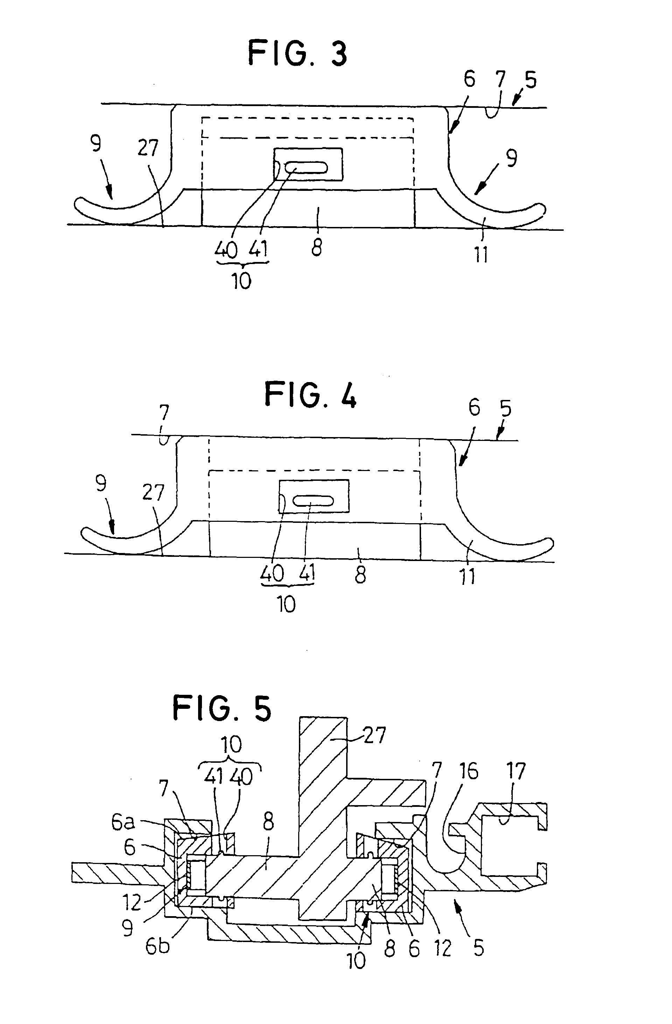

In Fig. 4 ist eine zweite Ausführungsform dargestellt, bei der die Gleitelemente 6 als Hohlquader mit einer durchgehenden Innenöffnung ausgebildet sind. Diese Konstruktion wird bevorzugt, wenn die Kulisse 27 näher an der Führungsnut 7 angeordnet ist, weil dadurch die Gleitelemente in Querrichtung schmaler ausgebildet werden können. In diesem Fall entstehen auch niedrigere Herstellungs- und Materialkosten.

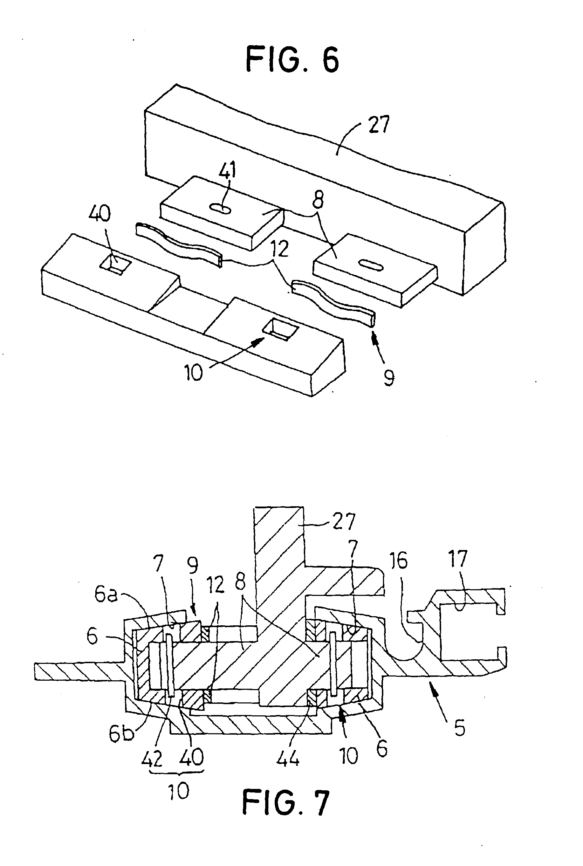

Die Figuren 5 und 6 illustrieren ein drittes Ausführungsbeispiel, bei dem die obere Gleitfläche 6a der Gleitelemente 6 eine geneigte Oberfläche aufweisen, während andererseits die obere und die untere Wand der zugehörigen Führungsnuten 7 parallel ausgebildet sind, wodurch die Führungsnut 7 in eine Linienberührung mit der oberen Gleitfläche 6a des Gleitelements 6 gerät. Ferner ist jeder Halter in Längsrichtung zweigeteilt und die dazugehörigen Gleitelemente 6 sind ebenfalls aus zwei Teilen zusammengesetzt. Die Federteile 9 werden statt durch die zungenförmigen Elemente von welligen Blattfedern 12 gebildet, die zwischen den Gleitelementen 6 und den Stirnflächen der Vorsprünge an den Haltern 8 angeordnet sind.

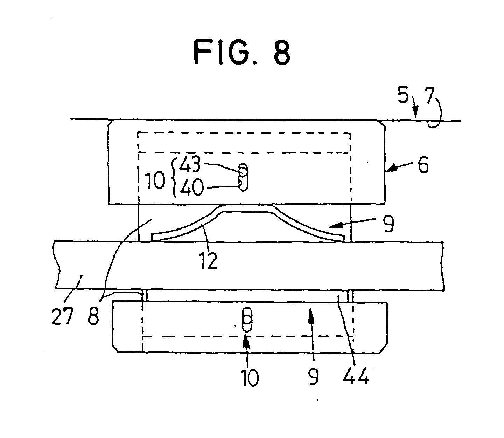

Mittels dieser dritten Ausführungsform hat das Gleitelement in Längsrichtung eine vergrößerte Anlagefläche an den zugehörigen Führungsnuten, so daß Rüttelbewegungen des Deckels in Querrichtung wirkungsvoll verhindert werden und Verformungen infolge von Belastungen oder Verwindungen abgefangen werden, so daß eine sanfte Gleitbewegung des Deckels 3 ermöglicht wird. Bei der in den Figuren 7 und 8 dargestellten vierten Ausführungsform, bei der sowohl die oberen und unteren Führungsflächen 6a und 6b jedes Gleitelements 6 als auch die dazu korrespondierenden oberen und unteren Führungsflächen an den Führungsnuten 7 konisch geneigt sind, wird die Rasteinrichtung 10 von einer schlitzartigen Öffnung 40 in jedem Gleitelement 6 gebildet, die mit einem Stift 43 am Halter 8 zusammenwirkt, der sich vertikal nach oben in die Öffnung 40 hineinerstreckt. Durch die langlochartige Ausbildung der Öffnungen 40 quer zu den Führungsschienen 5 ist eine begrenzte Relativbewegung der Gleitelemente 6 zu den Kulissen 27 gewährleistet.
Eine zwischen den Kulissen 27 und den Gleitelementen 6 angeordnete, als Federteil 9 dienende Blattfeder 12 dient zur elastischen Vorspannung der Gleitelemente 6 nach außen, während gleichzeitig ein auf der anderen Seite der Kulisse 27 zwischen dieser und dem anderen Gleitelement 6 angeordnetes Gummiteil 44 als weiteres Federteil 9 wirkt. Jedes Gleitelement 6 weist eine hohlquaderförmige Form auf wie bei der zweiten Ausführungsform.

Mittels dieser vierten Ausführungsform ist es möglich, die Referenzhöhe des Deckels 3 bezüglich des Zentrums der Führungsnuten 7 einzustellen, wodurch größere Toleranzabweichungen ausgeglichen werden können.

Die Erfindung ist nicht auf die vorgehenden Ausführungsbeispiele beschränkt; vielmehr können beispielsweise die Merkmale der ersten und der vierten Ausführungsform miteinander kombiniert werden und außerdem kann das Schiebedach nicht nur als Schiebehebedach, sondern auch als Spoilerdach oder als reines Schiebedach ausgebildet sein, bei dem der Deckel in ausgestellter oder abgesenkter Position über oder unter das feste Fahrzeugdach 2 verschiebbar ist.

Ferner kann der Ausstellmechanismus 25 auch derart ausgebildet sein, daß die Anhebenuten an einem fest mit dem Deckel 3 verbundenen Teil vorgesehen sind und daß die Gleitelemente mit entsprechenden Stiften oder Bolzen versehen sind, die in diese Nuten eingreifen. Beispielsweise kann eines der Gleitelemente 6 mit solch einem Eingriffsbolzen versehen sein. Ferner kann ein Gleitelement 6 auch nur auf einer der Seiten der Führungsmittel angeordnet sein.

Es ist weiterhin möglich, nur eine Führungsschiene, beispielsweise in der Mitte der Dachöffnung 4 verlaufend vorzusehen, längs welcher ein spoilerartig nach oben ausstellbarer und über dem festen Fahrzeugdach 2 nach hinten verschiebbarer Deckel 3 mittels einer erfindungsgemäßen Gleitvorrichtung geführt wird.

Es ist weiterhin denkbar, daß nur die untere Gleitfläche 6b jedes Gleitelements und die untere Führungsfläche an der unteren Wand der zugehörigen Führungsnut 5 eine geneigte Oberfläche aufweisen. Auch die Federteile 9 und die Rastelemente 10 können in abweichender Ausführungsform vorgesehen sein. Wenn Gleitelemente auf der rechten und der linken Seite der Kulissen vorgesehen sind, ist es möglich, nur auf einer dieser Seiten Federteile 9 vorzusehen, während auf der anderen Seite eine feste Anordnung eines Gleitschuhs ohne Rastelemente 10 oder dergleichen angeordnet sein.

### Bezugszeichenliste

- 1: Schiebedach
- 2: Fahrzeugdach
- 3: Deckel
- 4: Dachöffnung
- 5: Führungsschiene
- 6: Gleitelement
- 6a: obere Fläche
- 6b: untere Fläche
- 7: Führungsnut
- 8: Halter (an 3)
- 8F: Abschnitt
- 8R: Abschnitt
- 9: Federteil
- 10: Rastelement
- 11: (elastische) Zunge
- 12: Blattfeder
- 15: Antriebskabel
- 16: Kabelführung
- 17: Himmelsführung
- 18A,B, C: vordere mittlere und hintere Deckelabstützung
- 19: (vordere) Lagerung
- 20: Anschlag
- 23: Sicherungseinrichtung
- 23A: Rastelement
- 23B: Aussparung
- 25: Ausstellmechanismus
- 26: Ausstellhebel
- 27: Kulisse
- 28: Verbindungsstück
- 30: (hinterer) Stift (an 26)
- 31: Nut
- 32: (vorderer) Stift (an 26)
- 33: (erste) Anhebenut
- 34: (mittlerer) Stift
- 35: (zweite) Anhebenut
- 40: Öffnung (in 6)
- 41: Vorsprung (an 8)
- 43: Stift
- 44: Gummiteil

## Patentansprüche

1. Gleitvorrichtung für ein Schiebedach (1), das eine in einem Fahrzeugdach (2) vorgesehene Dachöffnung (4)mittels eines Deckels (3) wahlweise schließt oder zumindestens teilweise öffnet, mit wenigstens einer sich längs der Dachöffnung (4) erstreckenden Führungsschiene (5), in der in Führungsnuten (7) Gleitelemente (6) verschiebbar geführt sind, wobei die Gleitelemente (6) zur Abstützung des Deckels (3) bezüglich der Führungsschienen (5) dienen und in Querrichtung elastisch an mit dem Deckel (3) verbundenen Haltern (8) angeordnet sind, dadurch gekennzeichnet, daß wenigstens eines der Gleitelemente (6) und die zugehörige Führungsnut (7) eine geneigte obere und / oder eine geneigte untere Gleitfläche aufweisen, die sich in Richtung der Tiefe der Führungsnut (7) verengt und daß elastische Federteile (9) vorgesehen sind, welche die Gleitelemente (6) in Richtung auf die Tiefe der Führungsnut (7) federnd vorbelasten, so daß gegenüberliegende Gleitflächen (6a, 6b) an den Gleitelementen (6) und der Führungsnut (7) miteinander in Kontakt gehalten werden.

2. Vorrichtung nach Anspruch 1, dadurch gekennzeichnet, daß der Halter (8) und das Gleitelement (6) Rastelemente (10) aufweisen, die eine Relativbewegung von Halter (8) und Gleitelement (6) zueinander ermöglichen, gleichzeitig aber ein vollständiges Entfernen der Gleitelemente (6) von den Haltern (8) verhindern.

3. Vorrichtung gemäß einem der vorhergehenden Ansprüche, dadurch gekennzeichnet, daß auf der rechten und der linken Seite des Deckels (3) jeweils ein nach rechts und links vorspringender Halter (8) angeordnet ist und daß die Führungsschienen (5) jeweils ein paar von rechten und linken Führungsnuten (7) aufweisen, die einander gegenüberliegen.

4. Vorrichtung nach einem der vorhergehenden Ansprüche, dadurch gekennzeichnet, daß das Federteil (9) eine elastische Zunge (11) aufweist, die sich vom Gleitelement (6) in Richtung auf den Halter (8) erstreckt.

5. Vorrichtung nach einem der Ansprüche 1-3, dadurch gekennzeichnet, daß das Federteil (9) von einer elastischen Schicht (Gummiteil 44) gebildet wird.

6. Vorrichtung nach einem der Ansprüche 2-5, dadurch gekennzeichnet, daß das Rastelement von einem im Gleitelement (6) ausgebildeten Langloch (40) und einem darin eingreifenden Stift (43) am Halter (8) gebildet wird.

7. Vorrichtung nach einem der vorhergehenden Ansprüche, dadurch gekennzeichnet, daß mehrere in Längsrichtung hintereinander angeordnete Halter (8) gemeinsam mit einem Gleitelement (6) verbunden sind.

## Claims

1. Slide means for a sliding roof (1) which optionally closes or at least partially opens by means of a cover (3) a roof opening (4) provided in a vehicle roof (2) and with, extending along the roof opening (4), at least one guide rail (5) in which sliding elements (6) are guided for displacement in guide grooves (7), the sliding elements (6) serving to support the cover (3) in relation to the guide rails (5) and being in a transverse direction resiliently disposed on mounts (8) connected to the cover (3), characterised in that at least one of the sliding elements (6) and the associated guide groove (7) comprise an inclined upper and/or an inclined lower sliding surface which narrows in the direction of the depth of the guide groove (7) and in that resilient spring parts (9) are provided which resiliently pre-stress the sliding elements (6) in the direction of the depth of the guide groove (7) so that oppositely disposed sliding surfaces (6a, 6b) on the sliding elements (6) and the guide groove (7) are maintained in contact with one another.

2. Slide means according to Claim 1, characterised in that the mount (8) and the sliding element (6) comprise catch elements (10) which allow relative movement of mount (8) and sliding element (6) in relation to each other but at the same time prevent complete removal of the sliding elements (6) from the mounts (8).

3. Slide means according to one of the preceding Claims, characterised in that on the right and left hand sides of the cover (3) there is in each case a rightwardly and leftwardly projecting mount (8) and in that the guide rails (5) each comprise a pair of respectively right and left hand guide grooves (7) which are disposed opposite each other.

4. Slide means according to one of the preceding Claims, characterised in that the spring part (9) comprises an elastic tongue (11) which extends from the sliding element (6) in the direction of the mount (8).

5. Slide means according to one of Claims 1 to 3, characterised in that the spring part (9) is constituted by an elastic coating (rubber part 44).

6. Slide means according to one of Claims 2 to 5, characterised in that the catch element is formed by an elongate hole (40) constructed in the sliding element (6) and, engaging therein, a pin (43) on the mount (8).

7. Slide means according to one of the preceding Claims, characterised in that a plurality of mounts (8) disposed serially in a longitudinal direction are jointly connected to a sliding element (6).

## Revendications

1. Dispositif de glissement d'un toit coulissant (1) permettant au choix de fermer ou d'ouvrir au moins partiellement une ouverture (4) d'un toit de véhicule (2), au moyen d'un couvercle (3), le dispositif comportant au moins un rail de guidage (5) s'étendant le long de l'ouverture de toit (4) avec des rainures de guidage (7) dans lesquelles peuvent coulisser des éléments glissants (6) servant à soutenir le couvercle (3) sur les rails de guidage (5), ainsi qu'en direction transversale des supports (8) reliés élastiquement au couvercle (3)
caractérisé en ce qu'
au moins un des éléments glissants (6) et la rainure de guidage (7) associée présentent une portée de glissement à pente ascendante et/ou à pente descendante qui se rétrécit en direction du fond de la rainure (7), et que des éléments élastiques (9) exercent sur les éléments glissants (6) une contrainte élastique en direction du fond de la rainure de guidage (7), de sorte que des portées de glissement (6a, 6b) qui se font face sur les éléments glissants (6) et sur la rainure de guidage (7) sont maintenues en contact.

2. Dispositif selon la revendication 1,
caractérisé en ce que
le support (8) et l'élément glissant (6) présentent des éléments d'arrêt (10) qui permettent un mouvement relatif du support (8) et de l'élément glissant (6) mais empêchent en même temps que les éléments (6) se séparent totalement des supports (8).

3. Dispositif selon une des revendications précédentes,
caractérisé en ce que
sur chacun des côtés droit et gauche, du couvercle (3) est monté un support (8) faisant saillie vers la gauche et vers la droite, les rails de guidage (5) portant chacun une paire de rainures de guidage (7) situées à gauche et à droite, face à face.

4. Dispositif selon une des revendications précédentes,
caractérisé en ce que
l'élément élastique (9) comporte une languette élastique (11) qui part de l'élément glissant (6) en direction du support (8).

5. Dispositif selon une des revendications 1 à 3,
caractérisé en ce que
l'élément élastique (9) est formé par une couche élastique (pièce de caoutchouc 44).

6. Dispositif selon une des revendications 2 à 5,
caractérisé en ce que
l'élément d'arrêt est constitué par une boutonnière (40) taillée dans un élément glissant (6) et une tige (43) portée par le support (8) et engagée dans la boutonnière.

7. Dispositif selon une des revendications précédentes,
caractérisé en ce que
plusieurs supports disposés les uns derrière les autres en direction longitudinale, sont reliés à un élément glissant (6).
